# EUROPÄISCHE PATENTSCHRIFT

(11) **EP 1 525 784 B1**
(45) Veröffentlichungstag und Bekanntmachung des Hinweises auf die Patenterteilung: **20.02.2008**
(21) Anmeldenummer: 04024118.4
(22) Anmeldetag: 09.10.2004
(51) Int. Cl.: A01C 23/04, A01M 7/00

(54) **Landwirtschaftliche Verteilmaschine**
Agricultural spreader
Epandeur agricole

(30) Priorität: 23.10.2003 DE 10349326; 23.10.2003 DE 10349325
(43) Veröffentlichungstag der Anmeldung: 27.04.2005
(60) Teilanmeldung: 06002697.8
(73) Patentinhaber: Amazonen-Werke H. Dreyer GmbH & Co. KG, 49205 Hasbergen (DE)
(72) Erfinder: Oberheide, Friedrich, 49143 Bissendorf (DE)

(56) Entgegenhaltungen:
- AT-B- 397 451
- FR-A- 2 298 264
- FR-A- 2 669 805
- GB-A- 622 035
- US-A- 3 887 132
- US-A- 4 288 034
- US-A- 6 119 963

## Beschreibung

Die Erfindung betrifft eine landwirtschaftliche Verteilmaschine gemäß des Oberbegriffes des Patentanspruches 1.

Eine derartige landwirtschaftliche Verteilmaschine ist in der Praxis bekannt geworden beschrieben. Bei dieser landwirtschaftlichen Verteilmaschine ist der Seitenausleger mittels eines relativ breiten Gelenkes auf seiner Unterseite am Mittelrahmenteil angeordnet, um ein Verkanten oder Verdrehen des Auslegers um seine Längsachse zu verhindern. Im oberen Bereich ist zwischen dem Seitenausleger und dem Mittelrahmenteil ein Hydraulikzylinder angeordnet, um den Seitenausleger anwinkeln zu können. Hinsichtlich der Stabilität bezüglich des Verdrehens des Seitenauslegers um seine Längsachse trägt der obere Lagerpunkt zwischen Mittelteilrahmen und Seitenausleger nichts bei.

Die US-A- 4 288 034 und US-A- 3 887 132 zeigen eine Feldspritze mit einem Rahmen, einem Vorratsbehälter und einem Verteilergestänge. Das Verteilergestänge weist ein Mittelteil auf, welches am Rahmen angeordnet ist und an den um aufrechte Achsen einschwenkbare Seitenausleger angeordnet sind. Zwischen den an dem Mittelteil angeordneten Gelenkelementen des Seitenauslegers und dem Obergurt des Seitenauslegers ist ein als Hydraulikzylinder ausgebildetes Anwinkelmittel angeordnet. Des weiteren ist zwischen dem Obergurt und einem am Mittelteil angeordneten, nach hinten ragenden Arm eine Strebe angeordnet, um die Seitenausleger beim Einklappen in die nach vorn ragende Transportstellung in eine nach vorn-oben ragende Position anzuheben.

Der Erfindung liegt die Aufgabe zugrunde, eine einfache Ausgestaltung des Anwinkelmechanismus für die Seitenausleger eines Verteilergestänges einer Verteilmaschine zu schaffen.

Diese Aufgabe wird erfindungsgemäß dadurch gelöst, dass das jeweilige obere Gelenkelement, mittels welchem der jeweilige Seitenausleger am Mittelteil angeordnet ist, jeweils über das Anwinkelmittel und einer weiteren Strebe unmittelbar an dem Mittelteil angeordnet ist, und dass das Anwinkelmittel und die Strebe beabstandet zueinander am Mittelteilrahmen angelenkt sind. Infolge dieser Maßnahmen ergibt sich eine definierte Anordnung des oberen Gelenkpunktes zwischen dem Mittelteilrahmen und dem Seitenausleger. Hierbei sind in vorteilhafter Weise das Anlenkmittel und die Strebe in Draufsicht gesehen, sich von dem Gelenk am Seitenausleger öffnend zueinander angeordnet.

Um Fertigungstoleranzen auszugleichen, damit der Seitenausleger in seiner aufrechten Ausrichtung entsprechend angeordnet ist, ist vorgesehen, dass die Strebe als einstellbare Schraubspindel ausgebildet ist.

Um zu ermöglichen, dass der Seitenausleger gegenüber dem Mittelteil durch Verschwenken um eine in Fahrtrichtung verlaufende Achse angewinkelt und um eine aufrechte Achse in eine Transportstellung eingeklappt werden kann, ist vorgesehen, dass das jeweilige untere Gelenk, mittels welchem die jeweiligen Seitenausleger am Mittelteil angelenkt sind, eine aufrechte Gelenkachse und eine zumindest in Fahrtrichtung weisende Gelenkachse, bezogen auf die Arbeitsstellung des Verteilergestänges, aufweist. Hierdurch wird eine einfache Ausbildung des unteren Gelenkes erreicht. Eine besonders vorteilhafte Ausbildung des Gelenkes ergibt sich dadurch, dass dieses als Kugelgelenk ausgebildet ist.

Um bei Verteilergestängen, deren Seitenausleger um eine aufrechte Achse aus einer sich quer zur Fahrtrichtung erstreckenden lang gestreckten Arbeitsstellung um eine aufrechte Schwenkachse in eine nach vorn ragende zusammengefaltete Transportstellung gebracht werden, ohne Verschwenkbewegung des Seitenauslegers beim Anwinkeln aus seiner quer zur Fahrtrichtung gestreckten Lage anwinkeln zu können, ist vorgesehen, dass das einem Seitenausleger zugeordnete Stellelement und Anwinkelmittel mittels geeigneter Einstellmittel beim Betätigen des Anwinkelmittels in vorgegebener und gemeinsamer Weise verstellt werden und zwar derart, dass der jeweilige Seitenausleger bei Veränderung des Anwinkelwinkels seine Lage quer zur Fahrtrichtung beibehält.

Weitere Einzelheiten der Erfindung sind der Beispielsbeschreibung und den Zeichnungen zu entnehmen.

Hierbei zeigen
- Fig. 1: das Verteilergestänge einer landwirtschaftlichen Feldspritze in der Ansicht von hinten in gestreckter Lage und in Prinzipdarstellung,
- Fig. 2: das Verteilergestänge der Feldspritze nach Fig. 1, wobei die Seitenausleger angewinkelt sind,
- Fig. 3: das Verteilergestänge der Feldspritze nach Fig. 1, wobei der rechte Seitenausleger angewinkelt ist,
- Fig. 4: das Verteilergestänge einer landwirtschaftlichen Feldspritze in der Ansicht von hinten und in perspektivischer Darstellung und in gestreckter Lage,

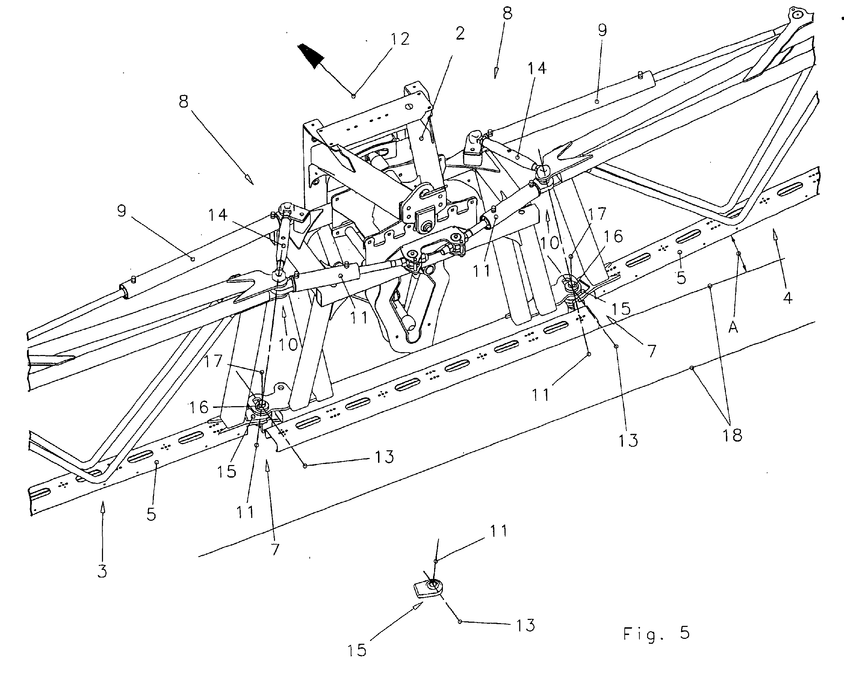

- Fig. 5: das Verteilergestänge gemäß Fig. 4, wobei der mittlere Bereich in Perspektivdarstellung von hinten gesehen dargestellt ist,

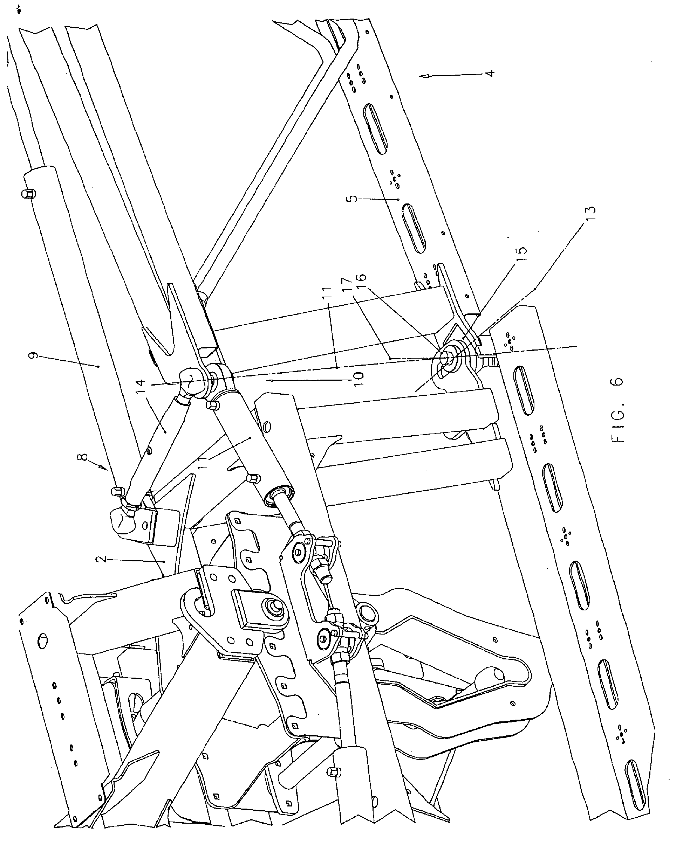

- Fig. 6: das Mittelteil und das daran anschließende Teil und das diese beiden miteinander verbindende Gelenk in Perspektivdarstellung von hinten und

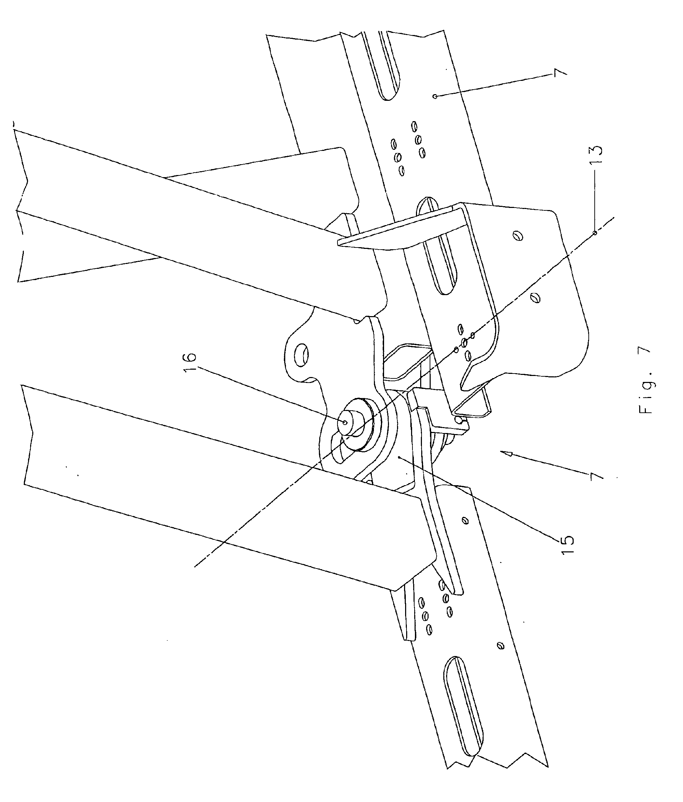

- Fig. 7: das untere mittlere rechte Gelenk in Perspektivdarstellung.

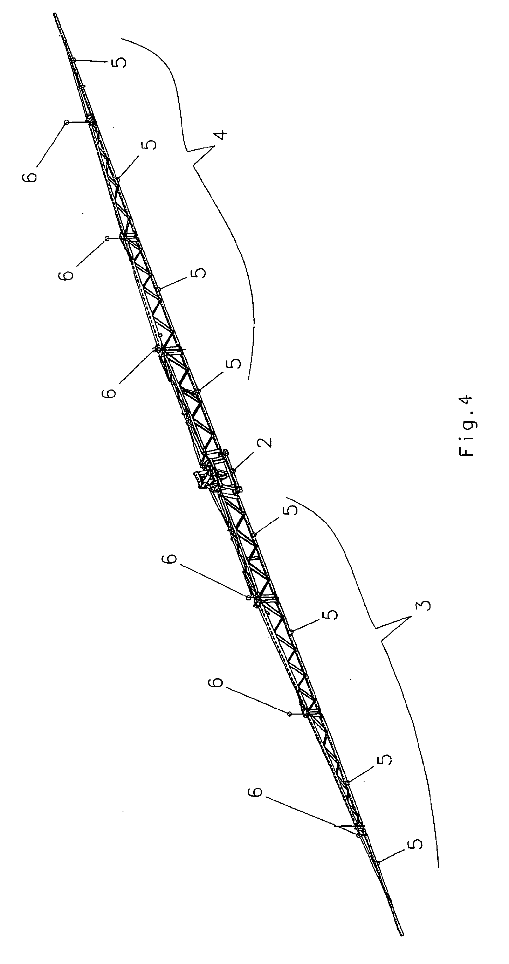

Das Verteilergestänge 1 ist zur Anordnung an einer nicht dargestellten landwirtschaftlichen Verteilmaschine, die einen Rahmen, Vorratsbehälter aufweist, vorgesehen. Das Verteilergestänge 1 weist ein Mittelrahmenteil 2 und sich hieran seitlich anschließende Seitenausleger 3 und 4 auf. Das Mittelrahmenteil 2 ist über ein Höhenverstellgestänge an dem Rahmen einer Verteilmaschine angeordnet. Die Seitenausleger 3,4 bestehen aus Teilsegmenten 5, die mittels Gelenke 6 miteinander verbunden sind, so dass die Seitenausleger 3,4 in eine Transportstellung zusammenfaltbar sind. Die Seitenausleger 3,4 sind über ein unteres Gelenk 7 und obere Gelenkelemente 8 an dem Mittelrahmenteil 2 angeordnet und über jeweils einen zwischen dem Mittelrahmenteil 2 und dem inneren Teilsegment 5 des jeweiligen Seitenauslegers 3,4 angeordneten Hydraulikzylinder 9 um die durch das untere Gelenk 7 und das obere Gelenkteil 10 der oberen Gelenkelemente 8 verlaufene Gelenkachse 11 ein- und ausfaltbar. Des weiteren ist zwischen dem oberen Gelenkteil 10 und dem Mittelrahmenteil 2 ein vorzugsweise als Hydraulikzylinder 11 ausgebildetes Anwinkelmittel, das Bestandteil der oberen Gelenkelemente 8 ist, zum Anwinkeln des jeweiligen Seitenauslegers 3,4 des Verteilergestänges um eine in Fahrtrichtung weisende Achse 13 zugeordnet. Des weiteren ist zwischen dem oberen inneren Teil des Seitenauslegers 3,4 im Bereich des oberen Gelenkteiles und dem Mittelrahmenteil 2 eine einstellbare Strebe 14, die Bestandteil der oberen Gelenkelemente 8 ist, angeordnet. Das als Hydraulikzylinder 11 ausgebildete Anwinkelmittel und die als einstellbare Schraubspindel ausgebildete Strebe 14 sind beabstandet zueinander am Mittelrahmenteil 2 angelenkt. Somit ist das obere Gelenkmittel 8, mittels welchem der jeweilige Seitenausleger 3,4 am Mittelrahmenteil 2 angeordnet ist, jeweils über das Anwinkelmittel 11 und der weiteren Strebe 14 mit dem Mittelrahmenteil 2 verbunden. Das Anwinkelmittel 11 und die Strebe 14 sind in Draufsicht gesehen von dem Gelenk 10 am Ausleger 3, 4 öffnend zueinander angeordnet, wie Fig. 4 zeigt.

Das untere Gelenk 7, mittels welchem das innere Teilsegment 5 des jeweiligen Seitenauslegers 3,4 am Mittelrahmenteil 2 angeordnet ist, ist als Kugelgelenk 15 ausgebildet. Dieses Kugelgelenk 15 weist einen aufrecht verlaufenen Gelenkbolzen 16 auf. Um die Mittelachse 17 dieses Gelenkbolzens 16 ist der Seitenausleger 3,4 in Verbindung mit dem Kugelgelenk 15 ein- und ausschwenkbar. Des weiteren ist der Seitenausleger 3,4 aufgrund des Kugelgelenkes 15 um eine in Fahrtrichtung 12 weisende Achse 18 bzw. mit anderen Worten ausgedrückt, um eine quer zur Längsachse 17 des Bolzens 16 verlaufene Achse 13 aufgrund der oberen Anlenkung durch die Gelenkelemente 8 des Seitenauslegers 3, 4 gegenüber dem Mittelrahmenteil 2 verschwenkbar.

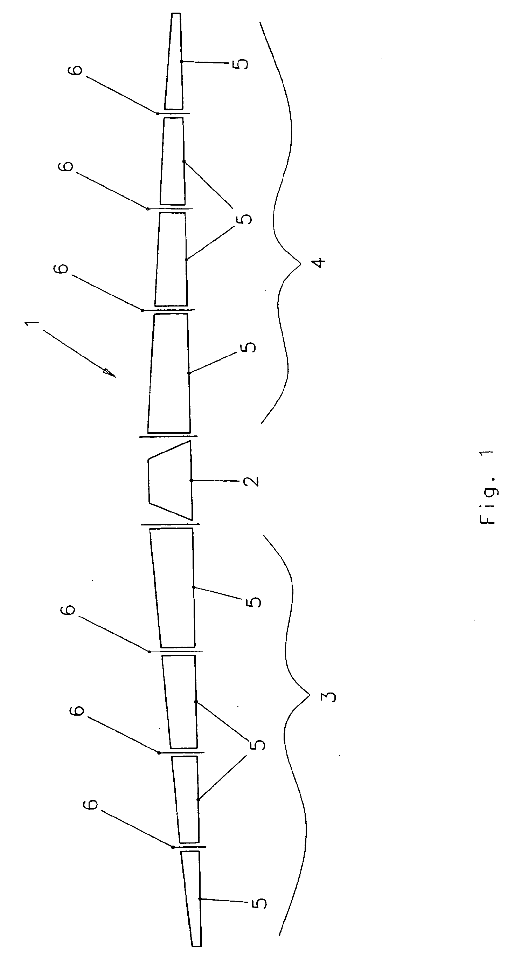

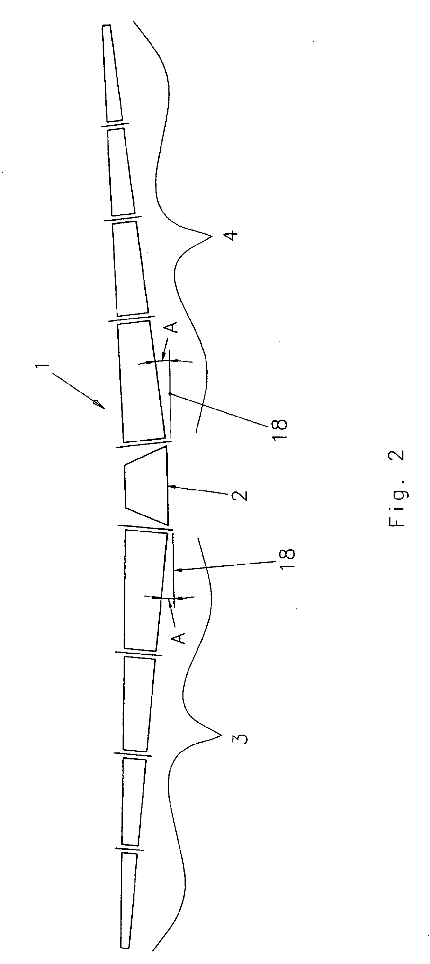

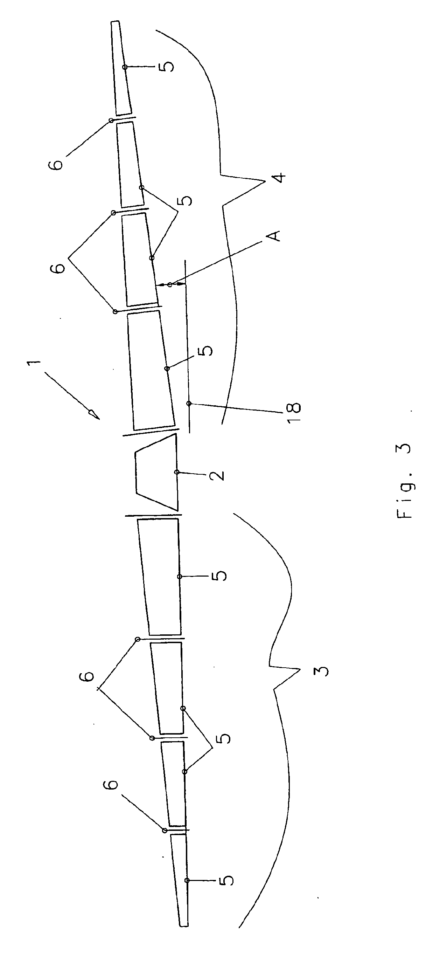

Aufgrund der Ausbildung des unteren Gelenkes 7 als Kugelgelenk 15, mittels welchem der jeweilige Seitenausleger 3, 4 an dem Mittelrahmenteil 2 angelenkt ist, sind die jeweiligen Seitenausleger 3, 4 aus der in Fig. 1 dargestellten gestreckten Lage in die in Fig. 2 dargestellte angewinkelte Lage um den Winkel A gegenüber der Horizontalen 18 anzuwinkeln. In der Fig. 3 ist der linke Seitenausleger 3 in gestreckter Lage entsprechend Fig. 1 dargestellt, während der rechte Ausleger 4 entsprechend Fig. 1 in der Fig. 2 angewinkelt ist.

Das Anwinkeln geschieht dadurch, dass mittels des Hydraulikzylinders 11 der obere Gelenkteil 10 in Richtung des Mittelrahmenteils 2 gezogen wird, d.h. der Hydraulikzylinder 11 wird eingefahren. Um gleichzeitig zu verhindern, dass durch diese Anwinkelbewegung des Seitenauslegers 3, 4 der jeweilige Seitenausleger 3, 4 nicht eine Tendenz zum Einfalten aufweist, wird der Hydraulikzylinder 9 ausgefahren. Hierzu sind die Hydraulikzylinder 9 und 11 über nicht dargestellte Leitungen mit einer nicht dargestellten Schaltung verbunden, so dass beim Betätigen des als "Einwinkelzylinders" wirkende Hydraulikzylinder 11 gleichzeitig der als Einfaltzylinder wirkende Hydraulikzylinder 9 ausgefahren wird. Hierdurch behält der jeweils angewinkelte Seitenausleger bei Veränderung des Anwinkelwinkels seine Lage quer zur Fahrtrichtung bei und kippt nicht um eine quer zur Fahrtrichtung des Gestänges verlaufenden Achse.

Aufgrund der Ausbildung des unteren Gelenkes 7 als Kugelgelenk 15 ist es nicht erforderlich, einen aufwendigen Zwischenrahmen zwischen dem Mittelrahmenteil 2 und dem Seitenausleger 3, 4 vorzusehen, um das Einwinkeln zu ermöglichen. Das Kugelgelenk 15 übernimmt somit gleichzeitig die Funktion eines Gelenkes beim Einwinkeln, wie auch die Funktion eines Gelenkes beim Ein- und Ausfalten der Seitenausleger 3, 4 des Verteilergestänges 1. Das Kugelgelenk 15 weist zumindest eine aufrechte Gelenkachse 11 und eine zumindest in Fahrtrichtung verlaufende Gelenkachse 13, bezogen auf die Arbeitsstellung des Verteilergestänges 1, auf.

## Patentansprüche

1. Landwirtschaftliche Verteilmaschine mit einem Rahmen, Vorratsbehälter und Verteilergestänge, welches in eine sich quer zur Fahrtrichtung erstreckende gestreckte Arbeitsstellung und in eine zusammengefaltete Transportstellung bringbar ist und aus einem am Rahmen höhenverstellbar angeordneten Mittelteilrahmen und sich hieran beiderseits mittels Gelenken angeordneten und zusammenfaltbaren Seitenauslegern besteht, wobei zwischen dem Mittelteilrahmen und jedem Seitenausleger jeweils ein vorzugsweise als Hydraulikzylinder ausgebildetes Stellelement zum Ein- und Ausfalten des Seitenauslegers angeordnet ist und jedem Seitenausleger ein vorzugsweise als Hydraulikzylinder ausgebildetes Anwinkelmittel zum Anwinkeln des Seitenauslegers um eine in Fahrtrichtung verweisende Achse zugeordnet ist, **dadurch gekennzeichnet, dass** das jeweilige obere Gelenkelement (8), mittels welchem der jeweilige Seitenausleger (3,4) am Mittelteil (2) angeordnet ist, jeweils über das Anwinkelmittel (11) und einer weiteren Strebe (14) unmittelbar an dem Mittelteilrahmen (2) angeordnet sind, und dass das Anwinkelmittel (11) und die Strebe (14) beabstandet zueinander am Mittelteilrahmen (2) angelenkt sind.

2. Verteilmaschine nach Anspruch 1, **dadurch gekennzeichnet, dass** das Anwinkelmittel (11) und die Strebe (14)in Draufsicht gesehen sich von dem Gelenk (10) am Seitenausleger (3,4) öffnend zueinander angeordnet sind.

3. Verteilmaschine nach Anspruch 1, **dadurch gekennzeichnet, dass** die Strebe als einstellbare Schraubspindel (14) ausgebildet ist.

4. Verteilmaschine nach Anspruch 1, **dadurch gekennzeichnet, dass** das jeweilige untere Gelenk (7), mittels welchem die jeweiligen Seitenausleger (3,4) am Mittelteil (2) angelenkt sind, eine aufrechte Gelenkachse (17) und eine zumindest in Fahrtrichtung weisende Gelenkachse (13), bezogen auf die Arbeitsstellung des Verteilergestänges (1) aufweist.

5. Verteilmaschine nach Anspruch 4, **dadurch gekennzeichnet, dass** das untere Gelenk als Kugelgelenk (15) ausgebildet ist.

6. Verteilmaschine nach einem oder mehreren der vorstehenden Ansprüche, **dadurch gekennzeichnet, dass** das einem Seitenausleger zugeordnete Stellelement und Anwinkelmittel mittels geeigneter Einstellmittel beim Betätigen des Anwinkelmittels in vorgegebener und gemeinsamer Weise verstellt werden und zwar derart, dass der jeweilige Seitenausleger bei Veränderung des Anwinkelwinkels seine Lage quer zur Fahrtrichtung beibehält.

## Claims

1. Agricultural distributor including a frame, hopper and distributor boom, which is movable into an extended operating position, extending transversely relative to the direction of travel, and into a folded up transport position and comprises a central part frame, which is disposed on the frame so as to be upwardly adjustable, and side outriggers, which are disposed on both sides of the said central part frame by means of pivot joints and can be folded up, wherein a control element, which is preferably in the form of a hydraulic cylinder, is disposed between the central part frame and each side outrigger for extending and folding up the side outrigger and an angle adjusting means, preferably in the form of a hydraulic cylinder, is associated with each side outrigger for adjusting the angle of the side outrigger about an axis that extends in the direction of travel, **characterised in that** the respective upper pivot joint element (8), by means of which the respective side outrigger (3, 4) is disposed on the central part (2), is disposed in each case directly on the central part frame (2) by means of the angle adjusting means (11) and an additional strut (14), and **in that** the angle adjusting means (11) and the strut (14) are pivotally mounted spaced apart on the central part frame (2).

2. Distributor according to claim 1, **characterised in that** the angle adjusting means (11) and the strut (14), when seen in top view, are disposed widening one relative to the other from the pivot joint (10) on the side outrigger (3, 4).

3. Distributor according to claim 1, **characterised in that** the strut is in the form of an adjustable screw spindle (14).

4. Distributor according to claim 1, **characterised in that** the respective lower pivot joint (7), by means of which the respective side outriggers (3, 4) are pivotally mounted on the central part (2), has an upright pivotal axis (17) and a pivotal axis (13) that extends at least in the direction of travel, with reference to the operating position of the distributor boom (1).

5. Distributor according to claim 4, **characterised in that** the lower pivot joint is in the form of a ball joint (15).

6. Distributor according to one or more of the preceding claims, **characterised in that** the control element and angle adjusting means associated with one side outrigger are adjusted by means of suitable adjusting means in a predetermined and common manner when the angle adjusting means is actuated, such that the respective side outrigger retains its position at right angles to the direction of travel when the angle of the angle adjusting means is modified.

## Revendications

1. Epandeur agricole comportant un châssis, un réservoir et une ossature de distribution se mettant dans une position de travail déployée, s'étendant transversalement à la direction de déplacement et une position de transport repliée et se composant d'une partie centrale réglable par rapport au châssis et de deux bras latéraux repliables, montés des deux côtés par l'intermédiaire d'articulations, et entre la partie centrale et chaque bras latéral il est prévu un élément d'actionnement de préférence en forme de vérin hydraulique pour replier et déployer les bras latéraux et à chaque bras latéral est associé un moyen de réglage d'angle de préférence en forme de vérin hydraulique pour régler l'angle du bras latéral autour d'un axe dirigé dans la direction de déplacement,
**caractérisé en ce que**
l'élément d'articulation supérieur (8), respectif par lequel chaque bras latéral (3, 4) est monté sur la partie centrale (2), chacun par l'intermédiaire du moyen de réglage d'angle de basculement (11) et d'une autre entretoise (14), sont montés directement sur la partie centrale (2), et
le moyen de réglage d'angle (11) et l'entretoise (14) sont articulés à la partie centrale (2) en étant écartés l'un de l'autre.

2. Epandeur selon la revendication 1,
**caractérisé en ce que**
le moyen de réglage d'angle (11) et l'entretoise (14) font en vue de dessus, un angle ouvert entre l'articulation (10) et le bras latéral (3, 4).

3. Epandeur selon la revendication 1,
**caractérisé en ce que**
l'entretoise est une broche filetée (14), réglable.

4. Epandeur selon la revendication 1,
**caractérisé en ce que**
l'articulation inférieure (7) respective qui relie de manière articulée chaque bras latéral (3, 4) à la partie centrale (2), comporte un axe d'articulation vertical (17) et un axe d'articulation (13) au moins dirigé dans la direction de déplacement par rapport à la position de travail de la tringlerie (1) de l'épandeur.

5. Epandeur selon la revendication 4,
**caractérisé en ce que**
l'articulation inférieure est une articulation à rotule (15).

6. Epandeur selon l'une quelconque des revendications précédentes,
**caractérisé en ce que**
l'élément d'actionnement associé à un bras latéral et le moyen de réglage d'angle sont réglés par des moyens de réglage appropriés pour commander l'angle d'inclinaison d'une manière prédéfinie et commune et cela de façon que chaque bras latéral conserve sa position transversalement à la direction de déplacement lorsqu'on modifie l'angle de réglage.
